# EUROPEAN PATENT SPECIFICATION

(11) **EP 0 884 877 B1**
(45) Date of publication and mention of the grant of the patent: **30.07.2008**
(21) Application number: 98304128.6
(22) Date of filing: 26.05.1998
(51) Int. Cl.: H04L 12/58, G06F 9/46

(54) **Remote server control**
Fernseherversteuerung
Commande de serveur à distance

(30) Priority: 27.05.1997 JP 13623297
(43) Date of publication of application: 16.12.1998
(73) Proprietor: International Business Machines Corporation, Armonk, NY 10504 (US)
(72) Inventor: Shioya, Masahiro, Sagamihara-shi, Kanagawa-ken (JP); Satoh, Kenichi, Yokohama-shi, Kanagawa-ken (JP); Nishida, Noriko, Sagamihara-shi, Kanagawa-ken (JP)
(74) Representative: Waldner, Philip

(56) References cited:
- BOGEN M ET AL: "W3GATE - A WEB ACCESS FOR OUTSIDERS" COMPUTER NETWORKS AND ISDN SYSTEMS, vol. 28, no. 14, November 1996, pages 1979-1990, XP000630956
- MAGEDANZ T ET AL: "INTELLIGENT AGENTS AN EMERGING TECHNOLOGY FOR NEXT GENERATION TELECOMMUNICATIONS?" PROCEEDINGS OF IEEE INFOCOM 1996. CONFERENCE ON COMPUTER COMMUNICATIONS, FIFTEENTH ANNUAL JOINT CONFERENCE OF THE IEEE COMPUTER AND COMMUNICATIONS SOCIETIES. NETWORKING THE NEXT GENERATION SAN FRANCISCO, MAR. 24 - 28, 1996, vol. 2, no. CONF. 15, 24 March 1996, pages 464-472, XP000621308 INSTITUTE OF ELECTRICAL AND ELECTRONICS ENGINEERS
- BIC L F ET AL: "DISTRIBUTED COMPUTING USING AUTONOMOUS OBJECTS" COMPUTER, vol. 29, no. 8, August 1996, pages 55-61, XP000632768

## Description

### Field of the Invention

The present invention relates to an information handling method, and in particular to a method for controlling a server at a remote location, or a method for receiving results obtained by processing performed by a server at a remote location.

### Description of the Background

Conventionally, when remote control is to be exercised to use a resource at a remote location, special remote controlling software must be installed in advance both in a machine to be remote controlled and in a machine to exercise the remote controlling.

Many of the remote controlling machines that are currently available are designed for operation in a variety of hardware and software environments, and some machines are operated by hardware or an OS that has restrictions. Therefore, a great expenditure of effort is required to develop remote controlling software and to install it on all these machines.

In addition, since the same software versions must be installed on remote controlled machines and on those that exercise the remote controlling, a great expenditure of effort is also required to manage these machines. For example, before installing an upgrade version, the versions on all the remote controlling machines must be examined.

It remote controlling software is developed for specific platforms, types of machines to be remote controlled are limited by the use of software, and the multi-platform operations that users demand can not be implemented.

When special remote controlling software is routinely installed in remote controlling machines, a certain amount of memory must be permanently allocated for its storage, and this constitutes a performance barrier, particularly to the downsizing of portable remote controlling machines.

The above conventional problem also occurred in the agent technique field disclosed in "Mobile Computer Agent Version J1.1, Third Edition, published by IBM Japan, Ltd. in October 1996 (SC88-3162-00)" and Japanese Unexamined Patent Publication Nos. Hei 7-182174 and Hei 7-509799.

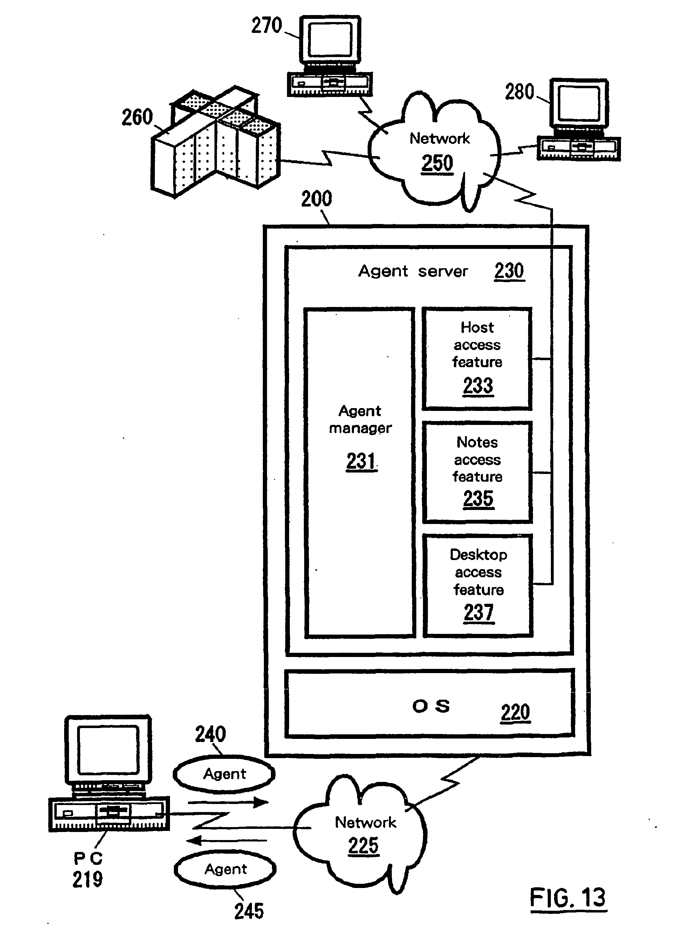

The technique related to the present invention, which involves requesting a remote server to perform processing and then obtaining the processing result, is described in Japanese Unexamined Patent Publication No. Hei 9-22348 and "Mobile Computer Agent Version J1.1, Third Edition, published by IBM Japan, Ltd. in October 1996 (SC88-3162-00), pp. 1-4 to 1-10 and pp. 15-1 to 15-8." These documents disclose a technique whereby, as is shown in Fig. 13, a mobile agent, which holds information for designating a set of procedures to be executed by a server, is sent by a terminal to a server, which in turn executes procedures stored in advance according to the designated information.

However, the above technique requires a terminal having the capacity to prepare a file, and the installation of special software in the terminal. Particularly since a portable information terminal (a smart phone or a PDA), which is a PHS phone that provides only an e-mail function and a simple input function, such as is performed with a numerical key pad and a set of function keys, can not handle a file, and since its storage area and input means are restricted, sending a request for the performance of complicated processing to a server from such a terminal is impossible.
Even a terminal that has an abundance of resources requires special software.

US548169B 'Computer System and Job Executing Method' discloses a method, performed in a serve connected to a network, generates a mobile agent from a received email.

### Objectives

It is therefore one object of the present embodiment of the invention to provide a computer system that can, by using only a currently installed e-mail system, control a program to be executed by a server, even when special remote controlling software is not available at a remote controlling terminal.

It is another such object to provide a computer system that, while not requiring special software, can obtain processing results from a remote controlled server by using only a current e-mail system.

It is an additional such object to provide a computer system that can remotely control a server even when the memory capacity of a remote controlling terminal is small.

It is a further object to provide a computer system that can remotely control a server even when on an operating system there is a restriction such that a remote controlling terminal can not handle a file.

It is still another object to provide a remote controlling system whose employment is not dependent on the platform of a remote controlling terminal.

It is a still further object to reduce the input required by a remote controlling terminal for the exercise of the remote control function.

It is yet another object to provide a fast remote controlling system that reduces the quantity of data exchanged between a remote control terminal and a remote controlled server during a remote controlling operation.

It is yet an additional object to provide a remote controlling system that can perform various desirable remote controlling processes.

It is yet one further object to provide a remote controlling system that can dynamically alter a remote controlling process currently desired by a user and execute it.

It is one more object to provide a computer system that can generate a mobile agent on a network by using only the current e-mail system and without requiring special software, and that can obtain information at another site connected to the network.

It is still one more object to provide a computer system that can generate a mobile agent on a network even when the memory capacity of a terminal that issues a request for the execution of a process is small, and that can obtain information from another site connected to the network.

It is yet one more object to provide a computer system that can generate a mobile agent on a network even when on an operating system there is a restriction, such that a terminal for issuing a request for the execution of a processing can not handle a file, and that can receive information from another site connected to the network.

It is also another object to provide a computer system that can generate a mobile agent on a network without depending on the platform of a terminal that issues a request for processing, and that can obtain information from another site connected to the network.

It is also an additional object to simplify an input operation performed by a terminal when a mobile agent is generated on a network and information is obtained from another site connected to the network.

It is also a further object to provide a fast remote controlling system for reducing the quantity of data exchanged, between a terminal that issues a request for processing and a server that generates a mobile gent, during an operation involving the generation of a mobile agent on a network, and for obtaining information from another site connected to the network.

It is also yet another object to provide a computer system that can execute a variety of processes a user desires during an operation for generating a mobile agent on a network, and that can obtain information from another site connected to the network.

It is also yet one more object to provide a computer system that can dynamically change the processing a user currently desires and can permit a mobile agent to execute it, when a mobile agent is generated on a network and information is obtained from another site connected to the network.

### Summary of the Present Invention

An e-mail originating at a terminal, such as a PDA, is sent to a server. Contained in such an e-mail are agent specify information, for specifying a mobile agent to be generated by a server, and a mail keyword that includes template change information for controlling the processing contents included in the agent.

A plurality of different agent generation templates are prepared at the server, and a specific agent generation template is updated in accordance with the mail keyword described in the e-mail. A mobile agent is generated, based on the updated template, and executed.

The processing results obtained by the mobile agent are converted into a formatted e-mail, which in turn is sent to the sender of a request or to another designated receiver.

According to a first aspect of the present invention, provided is a method performed in a server, the server connected to a network and storing agent generation templates, for receiving an e-mail and for generating a mobile agent that is designated by agent generation template specific information and agent generation template change information that are included in the e-mail, the information handling method comprising the steps of: (a) detecting receiving of the e-mail in the server; (b) analyzing the template specific information and the template change information in the e-mail; (c) selecting, from among the agent generation templates stored in the server, an agent generation template corresponding to the analyzed template specify information; (d) changing contents of the selected agent generation template in accordance with the analyzed template change information; (e) generating a mobile agent according to the changed agent generation template; (f) executing the mobile agent and obtaining processing results; (g) converting the processing results into a formatted e-mail; and (h) sending the resultant e-mail.

According to a second aspect of the present invention, provided is a method performed in a server, the server connected to a network and storing agent generation templates, for receiving an e-mail and for performing a process designated by template specify information, template change information and agent server specific information that are included in the e-mail, and by a mail keyword with included in a return address information, the information handling method comprising the steps of: (a) detecting receiving of the e-mail in the server; (b) analyzing the template specify information, the template change information and the agent server specific information included in the e-mail, and the return address information; (c) selecting, from among the agent generation templates stored in the server, an agent generation template corresponding to the analyzed template specify information; (d) changing contents of the selected agent generation template according to the analyzed template change information; (e) generating a mobile agent according to the changed agent generation template; (f) sending the mobile agent to an agent server corresponding to the agent server specify information; (g) obtaining processing results from the agent server; (h) converting the processing results into a formatted e-mail; and (i) sending the resultant e-mail to an address corresponding to the return address information.

According to a third aspect of the present invention, provided is a method performed in a server, the server connected to a network and storing a plurality of execution programs, for receiving an e-mail and for executing one of the plurality of execution programs according to an execution program specific information in the e-mail, the information handling method comprising the steps of: (a) detecting receiving of the e-mail in the server; (b) analyzing types of the execution program specific information in the e-mail; and (c) beginning an execution program corresponding to a type of the analyzed execution program specify information.

According to a fourth aspect of the present invention, a method, performed in a server connected to a network generates a mobile agent from a received e-mail, comprises the steps of: (a) detecting receiving of the e-mail in the server; (b) analyzing the e-mail and extracting agent generation information; and (c) generating a mobile agent according to the extracted agent generation information.

According to a fifth aspect of the present invention, provided is a method performed in a server, the server connected to a network, for receiving an e-mail and for generating a mobile agent by using agent template specific information included in the e-mail, the information handling method comprising the steps of: (a) detecting receiving of the e-mail in the server; (b) analyzing the agent template specific information in the e-mail; and (c) generating a mobile agent according to the analyzed agent template specify information.

According to a sixth aspect of the present invention, provided is a method whereby the contents of a stored template on a server connected to a network are changed by template change information included in a received e-mail, the method comprising the steps of: (a) detecting receiving of the e-mail in the server; (b) analyzing the template change information in the e-mail; (c) changing the contents of a template stored in the server according to the analyzed template change information; and (d) generating a program according to the changed template.

According to a seventh aspect of the present invention, the template change information are either (a) receiver information concerning results obtained by executing the program; (b) sub-routine specific information constituting one part of the program; (c) argument information employed by the program; (d) additional information relative to the results of the program; or (e) ressource specific information for a resource executing the program.

According to an eighth aspect of the present invention, provided is a method of changing contents of a program stored on a server connected to a network using program attribute change information in a received e-mail, the method comprising the steps of: (a) detecting receiving of the e-mail in the server; (b) analyzing the program attribute information in the e-mail; and (c) changing the contents of a program attribute stored in the server according to the analyzed program attribute change information.

According to a ninth aspect of the present invention, the program attribute change information are either (a) receiver information concerning results obtained by executing the program; (b) sub-routine specific information constituting one part of the program; (c) argument information employed by the program; (d) additional information relative to the results of the program; or (e) resource specific information for a resource executing the program.

According to a tenth aspect of the present invention, provided is a method performed in a server connected to a network converts agent processing results held by the server into an e-mail and sends the e-mail, the method comprising the steps of: (a) detecting receiving of the agent processing results in the server; (b) adding the agent processing results to an e-mail receiver information stored in the server and converting resultant data into a format for an e-mail; and (c) sending the e-mail in the obtained format to the e-mail receiver.

According to an eleventh aspect of the present invention, provided is a method performed in a server connected to a network converts agent results obtained by a program executed by the server into an e-mail and sends the e-mail, the method comprising the steps of: (a) detecting receiving of the results obtained by the program at the server; (b) adding the agent processing results to an e-mail receiver information stored in the server and converting resultant data into a format for an e-mail; and (c) sending the e-mail in the obtained format to the e-mail receiver.

According to a twelfth aspect of the present invention, provided is a server, connected to a network to which a mail handler sends an e-mail having a format obtained by conversion and storing a plurality of agent generation templates, the server comprising: (a) a mail handler for detecting receiving of an e-mail having a mail keyword that includes agent generation template specific information and agent generation template change information sent from a terminal; (b) a mail interpreter for analyzing the template specific information and the template change information included in the e-mail, and for selecting, from among the agent generation templates stored in the server, an agent generation template that corresponds to the analyzed template specify information; (c) an agent sender for changing contents of the selected agent generation template according to the analyzed template change information, and for generating a mobile agent according to the changed agent generation template; (d) a client agent manager for sending the mobile agent and obtaining processing results; and (e) a mail sender for converting the processing results into a format for an e-mail.

According to a thirteenth aspect of the present invention, provided is a server, connected to a network to which a mail handler sends an e-mail, having a format obtained by conversion, to a client corresponding to return address information, and storing a plurality of agent generation templates, the server comprising: (a) a mail handler for detecting when an e-mail containing a mail keyword, which includes template specify information, template change information, agent server specific information and return address information, is sent from the client to the server; (b-1) a mail interpreter for analyzing the template specify information, the template change information, the agent server specific information and the return address information contained in the e-mail, (b-2) for selecting, from among the agent generation templates stored in the server, an agent generation template corresponding to the analyzed template specify information, and (b-3) for changing contents of the selected agent generation template according to the analyzed template change information; (c) an agent sender for generating a mobile agent according to the changed agent generation template; (d-1) a client agent manager for sending the mobile agent to an agent server that corresponds to the agent server specify information, and (d-2) for receiving processing results from the agent server; and (e) a mail sender for converting the processing results into a format for an e-mail.

According to a fourteenth aspect of the present invention, provided is a server, connected to a network and storing a plurality of execution programs, for receiving an e-mail and for performing one of the plurality of execution programs according to an execution program specific information in the e-mail, the server comprising: (a) a mail handler for detecting receiving of the e-mail in the server; (b) a mail interpreter for analyzing types of the execution program specific information in the e-mail; and (c) means for beginning an execution program corresponding to a type of the analyzed execution program specify information.

According to a fifteenth aspect of the present invention, a server, connected to a network and generates a mobile agent from a received e-mail, comprising: (a) a mail handler for detecting receiving of the e-mail in the server; (b) a mail interpreter for analyzing the e-mail and extracting agent generation information; and (c) an agent sender for generating a mobile agent according to the extracted agent generation information.

According to a sixteenth aspect of the present invention, provided is a server, connected to a network, for receiving an e-mail and for generating a mobile agent by using agent template specific information in the e-mail, the server comprising: (a) a mail handler for detecting receiving of the e-mail in the server; (b) a mail interpreter for analyzing the e-mail and for analyzing the agent template specific information in the e-mail; and (c) a mail sender for generating a mobile agent corresponding to the analyzed agent template specify information.

According to a seventeenth aspect of the present invention, provided is a server, connected to a network, for receiving an e-mail and for changing the contents of a template by using template change information included in the e-mail, the server comprising: (a) a mail handler for detecting receiving of the e-mail in the server; (b-1) a mail interpreter for analyzing the e-mail and for analyzing the template change information in the e-mail, and (b-2) for changing the contents of a template stored in the server according to the analyzed template change information; and (c) means for generating a program according to the changed template.

According to an eighteenth aspect of the present invention, the template change information are either (a) receiver information concerning results obtained by executing the program; (b) sub-routine specific information constituting one part of the program; (c) argument information employed by the program; (d) additional information relative to the results of the program; or (e) resource specific information for a resource executing the program.

According to a nineteenth aspect of the present invention, provided is a server, connected to a network, for receiving an e-mail and for changing the contents of a program by using program attribute change information in the e-mail, the server comprising: (a) mail handler for detecting receiving of the e-mail in the server; (b) a mail interpreter for analyzing the program attribute change information in the e-mail; and (c) means for changing the contents of a program attribute stored in the server according to the analyzed program attribute change information.

According to a twentieth aspect of the present invention, the program attribute change information are either (a) receiver information concerning results obtained by executing the program; (b) sub-routine specific information constituting one part of the program; (c) argument information employed by the program; (d) additional information relative to the results of the program; or (e) resource specific information for a resource executing the program.

According to a twenty-first aspect of the present invention, provided is a server for converting agent processing results into an e-mail and for sending the e-mail, the server comprising: (a) a client agent manager for detecting receiving of the agent processing results in the server; (b) a mail sender for adding the agent processing results to an e-mail receiver information stored in the server and for converting resultant data to obtain a format suitable for an e-mail; and (c) a mail handler for sending the e-mail in the obtained format to the e-mail receiver.

According to a twenty-second aspect of the present invention, provided is a computer readable memory containing a computer executable program in a server, the server connected to a network and storing agent generation templates, for receiving an e-mail and for generating a mobile agent that is designated by agent generation template specific information and agent generation template change information in the e-mail, the information handling program comprising: (a) program code for instructing the server to detect receiving of the e-mail in the server; (b) program code for instructing the server to analyze the template specific information and the template change information in the e-mail; (c) program code for instructing the server to select, from among the agent generation templates stored in the server, an agent generation template corresponding to the analyzed template specify information; (d) program code for instructing the server to change contents of the selected agent generation template according to the analyzed template change information; (e) program code for instructing the server to generate a mobile agent according to the changed agent generation template; (f) program code for instructing the server to execute the mobile agent and to obtain processing results; (g) program code for instructing the server to convert the processing results into a format for an e-mail; and (h) program code for instructing the server to send the resultant e-mail.

According to a twenty-third aspect of the present invention, provided is a computer readable memory containing a computer executable program in a server, the server connected to a network and storing agent generation templates, for receiving an e-mail and for performing a process designated by template specify information, template change information and agent server specific information that are included in the e-mail, and by a mail keyword that includes return address information, the information handling program comprising: (a) program code for instructing the server to detect receiving of the e-mail in the server; (b) program code for instructing the server to analyze the template specify information, the template change information, the agent server specific information and the return address information in the e-mail; (c) program code for instructing the server to select, from among the agent generation templates stored in the server, an agent generation template corresponding to the analyzed template specify information; (d) program code for instructing the server to change contents of the selected agent generation template according to the analyzed template change information; (e) program code for instructing the server to generate a mobile agent according to the changed agent generation template; (f) program code for instructing the server to send the mobile agent to an agent server corresponding to the agent server specify information; (g) program code for instructing the server to obtain processing results from the agent server; (h) program code for instructing the server to convert the processing results into a format for an e-mail; and (i) program code for instructing the server to send the resultant e-mail to an address corresponding to the return address information.

According to a twenty-fourth aspect of the present invention, provided is a computer readable memory containing a computer executable program in a server, the server connected to a network and storing a plurality of execution programs, for receiving an e-mail and for executing one of the plurality of execution programs according to an execution program specific information in the e-mail, the information handling program comprising: (a) program code for instructing the server to analyze the e-mail and to extract the execution program specific information in the e-mail; and (b) program code for instructing the server to begin an execution program corresponding to a type of the extracted execution program specify information.

According to a twenty-fifth aspect of the present invention, provided is a memory medium storing a program used by a server, connected to a network and generates a mobile agent from a received e-mail, the program comprising: (a) program code for instructing the server to detect receiving of the e-mail in the server; (b) program code for instructing the server to analyze the e-mail and to extract agent generation information; and (c) program code for instructing the server to generate a mobile agent according to the extracted agent generation information.

According to a twenty-sixth aspect of the present invention, provided is a memory medium storing a program executed by a server, connected to a network, for receiving an e-mail and for generating a mobile agent by using agent template specific information in the e-mail, the information handling program comprising: (a) program code for instructing the server to detect receiving of the e-mail in the server; (b) program code for instructing the server to analyze the agent template specific information in the e-mail; and (c) program code for instructing the server to generate a mobile agent corresponding to the analyzed agent template specify information.

According to a twenty-seventh aspect of the present invention, provided is a memory medium storing a program, with which the contents of a template stored in a server connected to a network are changed by using template change information included in a received e-mail, the program comprising: (a) program code for instructing the server to detect receiving of the e-mail in the server; (b) program code for instructing the server to analyze the template change information in the e-mail; (c) program code for instructing the server to change the contents of a template stored in the server according to the analyzed template change information; and (d) program code for instructing the server to generate a program according to the changed template.

According to a twenty-eighth aspect of the present invention, the template change information are either (a) receiver information concerning results obtained by executing the program; (b) sub-routine specific information constituting one part of the program; (c) argument information employed by the program; (d) additional information relative to the results of the program; or (e) resource specific information for a resource executing the program.

According to a twenty-ninth aspect of the present invention, provided is a memory medium storing a program, with which the contents of a program stored on a server connected to a network are changed by program attribute change information in a received e-mail, the program comprising: (a) program code for instructing the server to analyze the e-mail and to extract a program attribute change information in the e-mail; and (b) program code for instructing the server to change the contents of a program attribute stored in the server according to the extracted program attribute change information.

According to a thirtieth aspect of the present invention, the program attribute change information are either (a) receiver information concerning results obtained by executing the program; (b) sub-routine specific information constituting one part of the program; (c) argument information employed by the program; (d) additional information relative to the results of the program; or (e) resource specific information for a resource executing the program.

According to a thirty-first aspect of the present invention, provided is a memory medium storing a program, with which a server connected to a network converts agent processing results held by the server into an e-mail and sends the e-mail, the program comprising: (a) program code for instructing the server to detect receiving of the agent processing results in the server; (b) program code for instructing the server to add the agent processing results to an e-mail receiver information stored in the server and to convert resultant data into an e-mail format; and (c) program code for instructing the server to send the e-mail in the obtained format to the e-mail receiver.

According to a thirty-second aspect of the present invention, provided is a memory medium storing a program, with which a server connected to a network converts agent results obtained by a program executed by the server into an e-mail and sends the e-mail, the program comprising: (a) program code for instructing the server to detect receiving of the results of the program by the server; (b) program code for instructing the server to add the agent processing results to an e-mail receiver information stored in the server and to convert resultant data into an e-mail format; and (c) program code for instructing the server to send the e-mail in the obtained format to the e-mail receiver.

According to a thirty-third aspect of the present invention, provided is a computer readable memory containing a computer executable information handling program in a server, the server connected to a network and storing a plurality of execution programs, for receiving a voice signal and for executing one of the plurality of execution programs according to an execution program specific information included in the voice signal, the information handling program comprising: (a) program code for instructing the server to analyze the voice signal and to extract the execution program specific information included in the voice signal; and (b) program code for instructing the server to begin an execution program corresponding to a type of the extracted execution program specify information.

According to a thirty-fourth aspect of the present invention, provided is a memory medium storing a program with which the contents of a program stored in a server connected to a network are changed by program attribute change information included in a received voice signal, the program comprising: (a) program code for instructing the server to analyze the voice signal and to extract the program attribute change information included in the voice signal; and (b) program code for instructing the server to change the contents of a program attribute stored in the server according to the extracted program attribute change information.

According to a thirty-fifth aspect of the present invention, provided is a computer readable memory containing a computer executable program in a server, the server connected to a network and storing a plurality of execution programs, for receiving a FAX signal and for executing one of the plurality of execution programs according to an execution program specific information included in the FAX signal, the information handling program comprising: (a) program code for instructing the server to analyze the FAX signal and to extract the execution program specific information included in the FAX signal; and (b) program code for instructing the server to begin an execution program corresponding to a type of the extracted execution program specify information.

According to a thirty-sixth aspect of the present invention, provided is a memory medium storing a program, with which the contents of a program stored in a server connected to a network are changed by program attribute change information included in a received FAX signal, the program comprising: (a) program code for instructing the server to analyze the FAX signal and to extract the program attribute information in the FAX signal; and (b) program code for instructing the server to change the contents of a program attribute stored in the server according to the extracted program attribute change information.

### Brief Description of Drawings

Fig. 1 is a block diagram illustrating one example hardware arrangement for a remote controlled machine or a slave server according to the present invention.
Fig. 2 is a diagram illustrating an example operating state of the present invention.
Fig. 3 is a block diagram illustrating the arrangement of a mail proxy according to the preferred embodiment of the present invention.
Fig. 4 is a diagram showing a user interface consisting of a mail proxy manager main window according to the embodiment of the present invention.
Fig. 5 is a diagram showing a user interface for a line setup according to the embodiment of the present invention.
Fig. 6 is a diagram showing a user interface for a property setup according to the embodiment of the present invention.
Fig. 7 is a diagram showing a user interface for a template registration according to the embodiment of the present invention.
Fig. 8 is a diagram showing another user interface for a template registration according to the embodiment of the present invention.
Fig. 9 is a diagram showing a user interface for user registration according to the embodiment of the present invention.
Fig. 10 is a diagram showing another user interface for user registration according to the embodiment of the present invention.
Fig. 11 is a flowchart showing the processing performed, from the time an e-mail is received until a mobile agent is sent, according to the embodiment of the present invention.
Fig. 12 is a flowchart showing the processing performed, from the time processing results included in a mobile agent are received until an e-mail is sent, according to the embodiment of the present invention.
Fig. 13 is a conceptual diagram showing the operating state of a conventional agent processing system.

### Description of the Preferred Embodiment

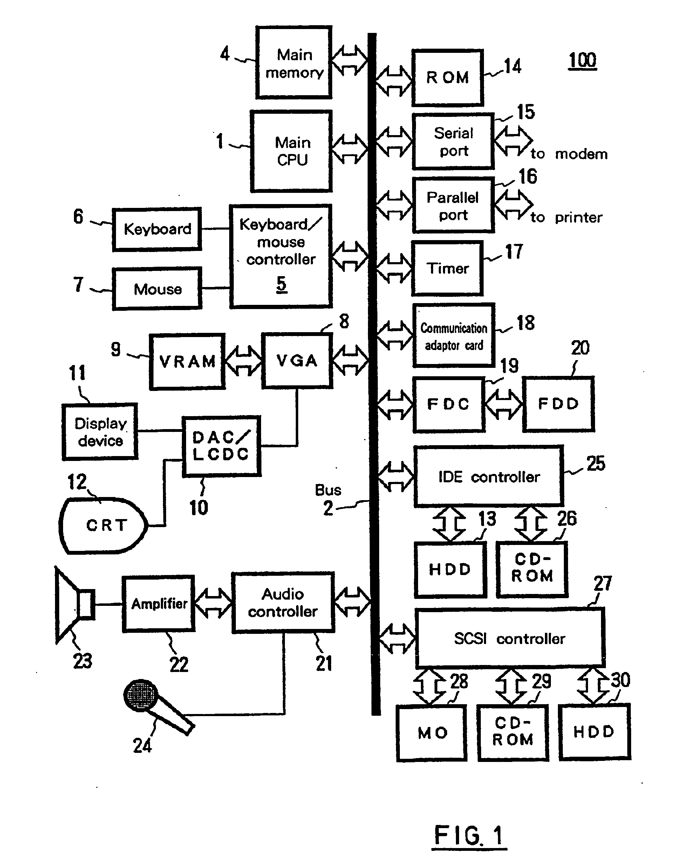

The preferred embodiment of the present invention will now be described while referring to the accompanying drawings. Fig. 1 is a schematic diagram illustrating one example hardware arrangement of a remote controlled machine (a slave server) that is employed for the present invention. A slave server 100 includes a central processing unit (CPU) 1 and a memory 4. The CPU 1 and the memory 4 are connected via a bus 2 to a hard disk drive 13 that is an auxiliary storage device. A floppy disk drive (or a memory medium driver, such as an MO and a CD-ROM) 20 is connected via a floppy disk controller 19 (an IDE controller or a SCSI controller) to the bus 2.

A floppy disk (or a memory medium, such as an MO or a CD-ROM) is inserted into the floppy disk drive (or into a memory medium driver, such as one for an MO or a CD-ROM disk) 20. Code for a computer program can be recorded on the floppy disk or the hard disk drive 13, or in a ROM 14, so that the computer program interacts with an operating system and provides commands for the CPU 1 to accomplish the present invention. This computer program is loaded into the memory 4 and is executed. The computer program code can also be compressed, or can be divided into a plurality of segments, and can be recorded on a plurality of media.

The slave server 100 also has user interface hardware, with which are connected a pointing device (a mouse or a joystick) 7 or a keyboard 6 for data input, and a display 12 for providing visual data for a user. In addition, it is possible to connect a printer via a parallel port 16 and a modem via a serial port 15. The slave server 100 can be connected to a network via the serial port 15 and the modem, or via a communication adaptor 18 (the Ethernet or a Tokenring card), for communicating with another computer.

A voice signal, which is obtained by D/A (digital/analog) conversion of an audio controller 21, is sent via an amplifier 22 to a loudspeaker 23, through which the voice signal is released as sound. The audio controller 21 can perform A/D (analog/digital) conversion of a voice signal received from a microphone 24, and can fetch external audio data into the system.

As is described above, it can be easily understood that the slave server 100 may be provided by a communication terminal having a communication function, such as a common personal computer (PC), a workstation, a notebook PC, a palmtop PC or a network computer, or by a combination of such terminals. It should be noted that the above components in Fig. 1 are only examples, and that not all of them are required for the present invention.

Particularly since the above described hardware arrangement is required for a user to execute a designated program, the audio controller 21, the amplifier 22, the loudspeaker 23 and the microphone 24, which are required for audio processing; the keyboard 6, the mouse 7 and a keyboard/mouse controller 5, which permit direct input by an operator; the CRT 12, a display device 11, a VRAM 9 and a VGA 8, which provide visual data for a user; and various memory medium processors 19, 25 and 27 are not requisite components.

Various possible modifications of the components of the slave server 100 would be readily apparent to one having ordinary skill in the art. For example, a plurality of machines would be combined and functions could be distributed among these machines for the execution of an operation.
These modifications are included in the subject of the invention.

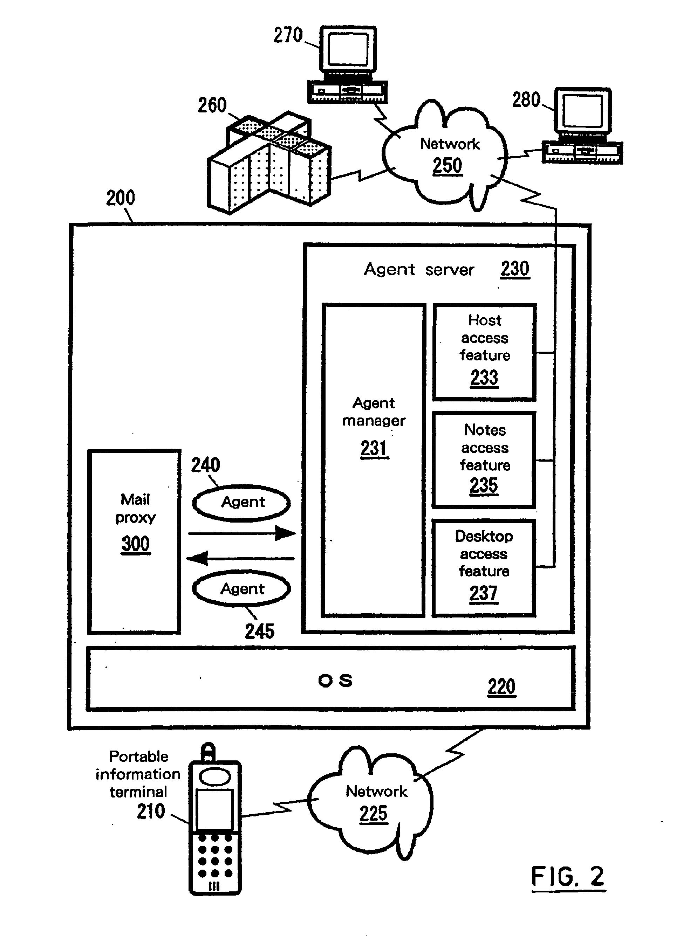

As well as the slave server 100, a remote controlling terminal (a master controller 210 in Fig. 2) used for the present invention can be provided by using the same hardware as is shown in Fig. 1. That is, the master controller 210 needs only input a mail keyword and send it as an e-mail. It can therefore be easily understood that the master controller 210 may be provided by a common personal computer (PC), a workstation, a notebook PC, a palmtop PC, an electronic home appliance, such as a television incorporating a computer, a game machine including a communication function, or a communication terminal having a communication function, such as a telephone, a facsimile machine, a portable telephone, a PHS phone or an electronic notebook, or by a combination of such devices.

These hardware components are only examples and not all of them are required for the present invention. In particular, as a smart phone, such as "Datascope" by Kyocera or "Pinocchio" by Panasonic, that has only a telephone and display output function and a communication function for e-mail is used as a master controller, the preferred embodiment of the present invention does not necessarily require the audio controller 21, the amplifier 22, the loudspeaker 23 and the microphone 24, which are required for audio processing; the keyboard 6, the mouse 7 and the keyboard/mouse controller 5, which permit direct input by an operator; the CRT 12, the display device 11, the VRAM 9 and the VGA 8, which provide visual data for a user; and the memory medium processors 19, 25 and 27.

An operating system for the slave server 100 can be: one supporting a GUI multi-window environment as standard, such as Windows NT (trademark of Microsoft Corp.), Windows 95 (trademark of Microsoft Corp.), Windows 3.x (trademark of Microsoft Corp.), OS/2 (trademark of IBM Corp.), MacOS (trademark of Apple Inc.) or the X-WINDOW system (trademark of MIT) on AIX (trademark of IBM); one having a character based environment, such as PC-DOS (trademark of IBM Corp.) or MS-DOS (trademark of Microsoft Corp.); or an OS installed in a network computer, for example, a real time OS such as OS/Open (trademark of IBM Corp.) or VxWorks (trademark of Wind River Systems, Inc.), or JavaOS. In other words, the operating system for the master controller 100 is not limited to a specific operating system environment.

An operating system for the master controller 210 can also be: one supporting a GUI multi-window environment as standard, such as Windows NT (trademark of Microsoft Corp.), Windows 95 (trademark of Microsoft Corp.), Windows 3.x (trademark of Microsoft Corp.), OS/2 (trademark of IBM Corp.), MacOS (trademark of Apple Inc.) or the X-WINDOW system (trademark of MIT) on AIX (trademark of IBM); one having a character based environment, such as PC-DOS (trademark of IBM Corp.) or MS-DOS (trademark of Microsoft Corp.); an OS installed in a network computer, for example, a real time OS such as OS/Open (trademark of IBM Corp.) or VxWorks (trademark of Wind River Systems, Inc.), or JavaOS; or a chip card OS used in "Datascope." In other words, the operating system for the master controller 210 is not limited to a specific operating system environment.

### B. System configuration

The system configuration in the preferred embodiment of the present invention will now be described while referring to Fig. 2. In this embodiment, a portable information terminal (terminal) 210 acts as a PHS phone or a portable telephone, and can access a server 200 connected to a network 225. In this embodiment, a mail proxy 300 and an agent server 230 are activated on an OS (operating system) 220 of the server 200.

The mail proxy 300 generates a mobile agent 240 from data in an e-mail received from the terminal 210, and sends the mobile agent 240 to the agent server 230. An agent manager 231 in the agent server 230 analyzes the contents of the mobile agent 240. And in accordance with the analysis, the agent manager 231 accesses a host computer 260, a Notes server (a trademark of Lotus Corp.) 270, or a home desktop PC 280, and acquires data (e.g., data in a customer database held by the host computer, schedule data for a supervisor or the Internet/Intranet data held by the Notes server, or reference material for a meeting prepared by the home desktop computer).

The agent manager 231 sends the acquired data to the mail proxy 300 in the form of a mobile agent 245. Upon receipt of the mobile agent 245, the mail proxy 300 converts it into an e-mail form, and sends it to the terminal 210.

In the preferred embodiment of the present invention, the mail proxy 300 is added to the current agent processing system to implement the present invention. However, the concept of the present invention is not limited to this application. For example, the present invention can be accomplished by providing the agent manager 231 the function of the mail proxy 300, and by mounting the mail proxy 300 and the agent server 230 on separate machines.

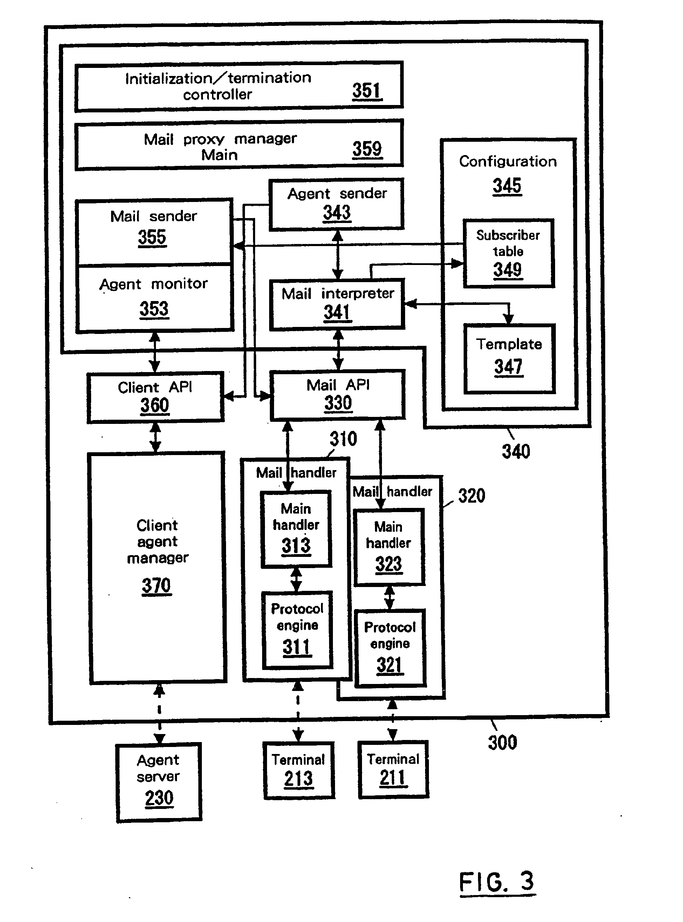

Fig. 3 is a functional block diagram illustrating the system configuration of the mail proxy 300 in the preferred embodiment of the present invention. In this embodiment, the mail proxy 300 includes mail handlers 310 and 320, a mail API 330, a mail proxy manager 340, a client API 360, and a client agent manager 370.

An initialization/termination controller 351 performs a preprocess to activate the mail proxy 300, and prepares windows for the mail proxy 300; activates individual components of the mail proxy 300, the client agent manager 370, and the mail handlers 310 and 320; performs a post-process for removing the mail proxy 300; and destroys the windows and the components of the mail proxy 300, the client agent manager 370, and the main handlers 310 and 320.

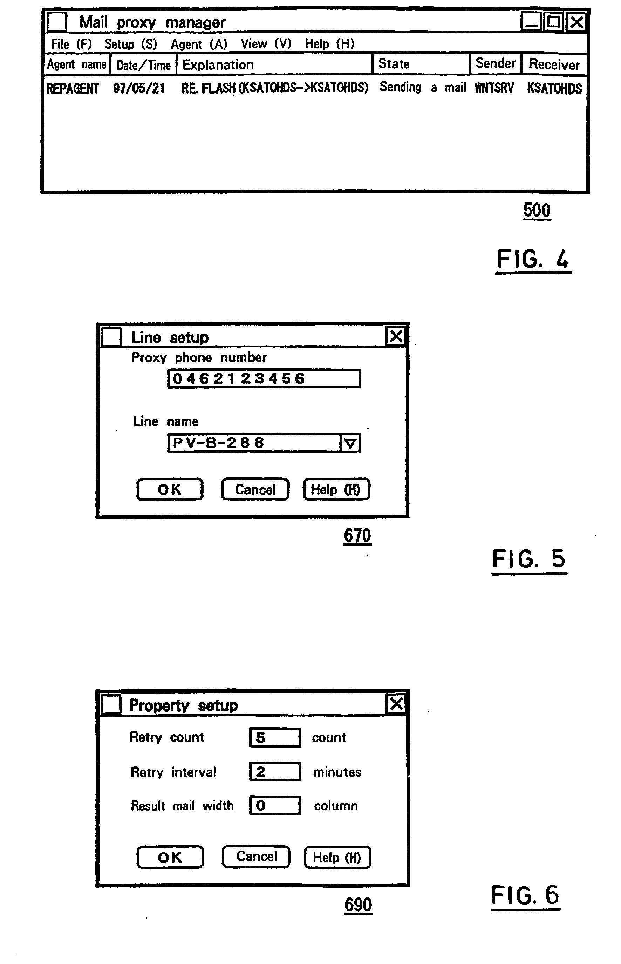

When the mail proxy 300 is activated and the state of the mobile agent 245 at the mail proxy 300 is changed (when a mobile agent is received, a sending error occurred or an e-mail is being prepared), a mail proxy manager main 359 displays or changes the state in the window of the mail proxy 300, and also provides a user interface. In Fig. 4 is shown a mail proxy manager main window 500. With such a interface for displaying the state of the mobile agent 245, the state of the mobile agent can immediately be understood by a user.

A configuration 345 provides the configuration required by the mail proxy 300. In this embodiment, the following configuration is provided.
1. A subscriber table data 349 in which users are registered is stored for use by the mail proxy 300.
   In this embodiment, a user ID registered in the agent server 230 is correlated with an alias and an address for mail sending (access information, such as a telephone number or an e-mail address), and a user ID registered in the agent server 230 is correlated with a password used in common to authenticate terminals 211 and 213.
2. A template 347 is stored for use by the mail proxy 300.
3. A modem and a property can be constituted (for example, the settings for a modem shown in Figs. 5 and 6, and an option setup, such as the number of retries when mail is sent by the mail proxy 300).

A mail interpreter 341 analyzes an agent mail keyword written in the body of an e-mail, and generates a new template by changing of the template 347 or adding it. In the embodiment of the present invention, the agent generation template is employed to generate a mobile agent. However, in the mode where the mail keyword of the e-mail is used to change the attribute of a program to be executed in the server 200, the template is not employed; and based on the analyzed mail keyword, source code for the program in the server 200 can be updated to generate an execution module, or the execution module can be updated directly.

Based on the new template received from the mail interpreter 341, an agent sender 343 specifies a program registered in advance, and updates the contents of the program. This program may be either a common program executed in the server 200, or a program for generating a mobile agent that acquires data from another site on the network.

When the agent generation program is designated, the agent sender 343 employs a new template received from the mail interpreter 341, and prepares a mobile agent by using a client API 360.

An agent monitor 353 uses the client API 360 to periodically examine the queue of a client agent manager 370 to determine whether or not a mobile agent is present.

A mail sender 355 extracts, from a mobile agent, data that includes the results of processing and the results obtained by the execution of a common program and that serves as the body of an e-mail. Data for an address to which processing results are to be sent is sent to the mail handlers 310 and 320.

The mail handlers 310 and 320 include main handlers 313 and 323, and protocol engines 311 and 321. The protocol engines 311 and 321 analyze and process the protocol for mail sent by the terminal, and later, recovers it as an e-mail. Specifically, a set of data received via a communication line is analyzed and processed according to the protocol. Then, the set of data is recovered in the form of an e-mail and a file is generated.

The protocol engines 311 and 321 transmit notification of the arrival of an e-mail to the main handlers 313 and 323.

The main handlers 313 and 323 extract the body portion of the e-mail received at the mail proxy 300, from which the header portion is removed, and sender information, which is included in the header portion, and send the body portion and the sender information via the mail API 330 to the mail interpreter 341. The main handlers 313 and 323 also prepare an e-mail using the body portion and the destination information corresponding to the process results, and send the e-mail to the designated address.

The main handlers 313 and 323 extract the body portion of the e-mail, from which the header portion is removed, and the sender information, which is included in the header portion, and send them via the mail API 330 to the mail interpreter 341.

In the preferred embodiment of the present invention, a plurality of mail handlers 310 and 320 can be operated in parallel, and the mail API 330 absorbs the timing differences between the mail handlers when they are operated in parallel.

The client agent manager 370 processes a request from a client API, sends a mobile agent to a designated location, and obtains the results of processing.

Although the functional blocks in Figs. 2 and 3 have been explained, these functional blocks are logical, and are not meant to be constituted by a set of hardware or software components, but can be constituted by compounded or common hardware and software components. Not all the functional blocks in Figs. 2 and 3 are required for the present invention. For example, if authentication of a sender is not performed, the subscriber table 349 is not required, and if an API for facilitating the exchange of an e-mail is provided to support Internet mail, the protocol engines 311 and 321 are not required.

The arrangement in Fig. 3 is required to execute a program for generating a mobile agent in the slave server 200. So long as the arrangement is one where an application program that is completed at the slave server 200 is executed, the agent sender 343, the agent monitor 353, the client API 360 and the client agent manager 370 may not be required. And only a program execution section need be provided that executes an application program in such a manner that a change that is received from the mail interpreter 341 is reflected and that sends the results to the mail sender 355.

### C. Preprocess

The preprocess for performing the preferred embodiment of the present invention will now be described.

### C-1. Preparation and registration of template

A template is prepared and registered as a preprocess for performing the method of the present invention.

First, a template is prepared by using a text editor. In the preferred embodiment of the present invention, the template is a conversion file that changes a pattern program stored in the server 200, and then executes the program. In this embodiment, an explanation will be given for an agent preparation program. Table 1 shows an example template for the preferred embodiment of the present invention.

**[Table 1]**

| |
|---|
| [NAG] |
| ; |
| Name=Agent1 |
| Feature=HostACC |
| Program=g:\mail\sendmail.exe |
| ProgramType=W32EXE |
| ProgramLocation=REMOTE |
| ProgramArgs=JL07457 |
| ResultHandling=NONE |
| Capability=<host1t1> |
| ReplyReceiverID=OS2CLN |

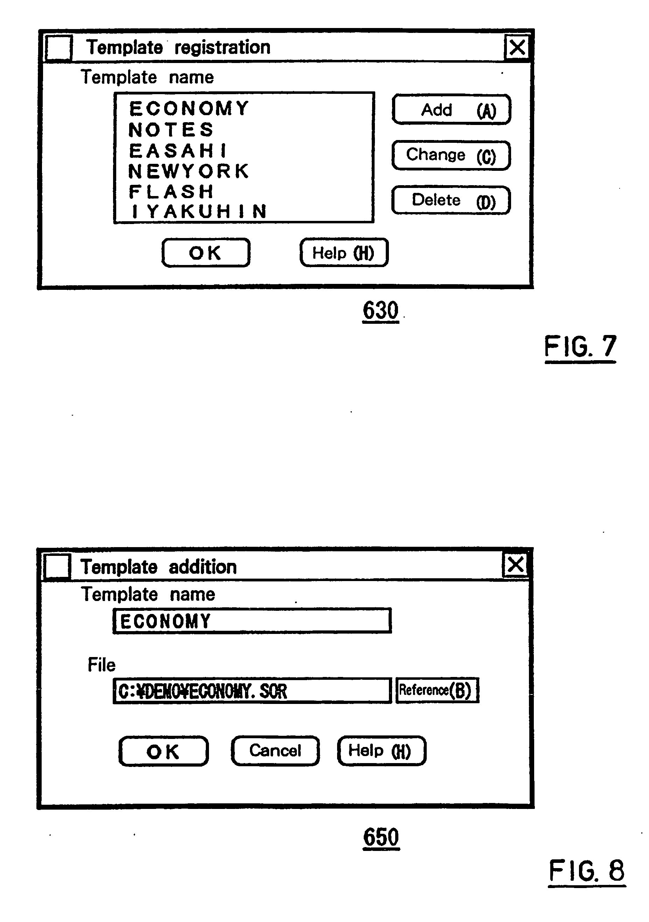

The prepared template registered in the mail proxy 300. In the preferred embodiment of the present invention, a user interface shown in Figs. 7 and 8 is provided and can be registered in the following manner.

First, Setup is selected from a menu bar on a mail proxy main screen 500 (Fig. 4), and template registration is selected. Next, Add is selected on a screen 630 in Fig. 7 for registering a template. Then, when a template addition screen 650 in Fig. 8 is displayed, the name of a template is entered in a template name box, and a file name is entered in a file name box by using a path to the location of the prepared template. An OK button is selected to validate the data entered.

### C-2. Preparation of mail keyword

The terminals 211 and 213 prepare e-mail by using agent mail keywords, and send the e-mail to the mail proxy 300. The mail proxy 300 employs the agent mail keywords to generate a mobile agent 240 and sends it to the agent server 230. The keywords constitute the contents of the mobile agent. Examples of the agent mail keywords in this embodiment are shown in Table 2.

**[Table 2]**

| |
|---|
| #TEMPLATE = "SENDMAIL" |
| #DEST=SRV |
| #ARGS=JL03320 |
| #RESULT=AUTO |
| #RECEIVER=PROXY1 |

In the preferred embodiment of the present invention, "#template" is used either to designate the name of a template registered in the mail proxy 300, or to directly designate a file name for the template and a path to the file in the mail proxy 300.

For example, when a template name is registered in the mail proxy 300, "#template="getmail" " is designated. To directly designate a file name of a template, "#template= c:\nag\getmail.src" is designated.

"#dest" is used to designate an agent server name or the name of a capability. When a server name is designated, "#dest=SERVER" is designated. When a capability is designated, "#dest=<capa1>" is designated.

"#args" is used to set an argument in a user program as needed. In this case, "#args=arg1 arg2 arg3" is designated.

"#result" is used to designate how the resultant mobile agent is to be processed in the agent server 230. In this embodiment, when this keyword is not designated and when nothing is designated in resulthandling in the file of the template designated by #template, the mobile agent is automatically returned. For example, "#result=auto" is designated for an automatic return, "#result=keep" is designated for holding the results at the agent server 230, and "#result=none" is designated for abandoning the results at the agent server 230.

"#receiver" is used when the resultant agent is sent to another user. In this case, "#receiver=OS2CLN (client name registered in the agent server 230) is designated.

In the preferred embodiment of the present invention, the following keywords are provided in addition to those shown in Fig. 2.

"#fax" is used to designate a FAX number when the results of the mobile agent is output through the facsimile. For example, "#fax=03-1234-5678" is designated.

"#deliver" is a keyword for designating a FAX cover page. The keyword is used together with #FAX. In this embodiment, the names of a path and a file are designated as "#deliver=c:\fax\cover.txt."

When keyword "#file and #efile" is designated, a data file used by a program that is executed by a mobile agent is prepared at the mail proxy 300 and is sent as a mobile agent to the server. The contents written between #file and #efile are written in the data file.

In the preferred embodiment of the present invention, the designation shown in Table 3 is possible.

**[Table 3]**

| |
|---|
| #file=A.TXT |
| roger |
| #efile |

"#file=A.TXT" is the name of a data file prepared by the mail proxy 300, "roger" is a character string to be written out, and "#efile" indicates the termination of the contents to be written.

"#get" is designated to acquire an e-mail present in the mail proxy 300 or a mobile agent present in the agent server 230. In this embodiment, "#get=mail" is designated to acquire an e-mail present in the mail proxy 300, while the designation shown in Table 4 is performed to acquire a mobile agent present in the agent server 230.

**[Table 4]**

| |
|---|
| #get=agent srv |
| #get=agent <3270> |

"#get=agent srv" is used to designate a server name. "#get=agent <3270>" designates a capability that a server must perform the function.

In this embodiment, when an agent mail keyword differs from the contents of a template, the one that is designated later is given priority. Since the mail keyword is satisfactory so long as the mail proxy 300 can specify the type of mail by using the mail keyword, the mail keyword may be a simple numeral or symbol. In addition, the mail keyword can be converted by the mail proxy 300 for easier processing.

### C-3. Sending of e-mail

Assume that in the following example, the setup is performed as follows.
(a) A client name set when the mail proxy 300 is installed is MAIPROXY.
(b) The setup shown in Table 5 is performed to configure the system of the agent server 230.

**[Table 5]**

| Alias for MAIPROXY | User name | User's password |
|---|---|---|
| PROXY1 | DSP01 | DSPPASS1 |
| PROXY2 | DSP02 | DSPPASS2 |
| PROXY3 | DSP03 | DSPPASS3 |

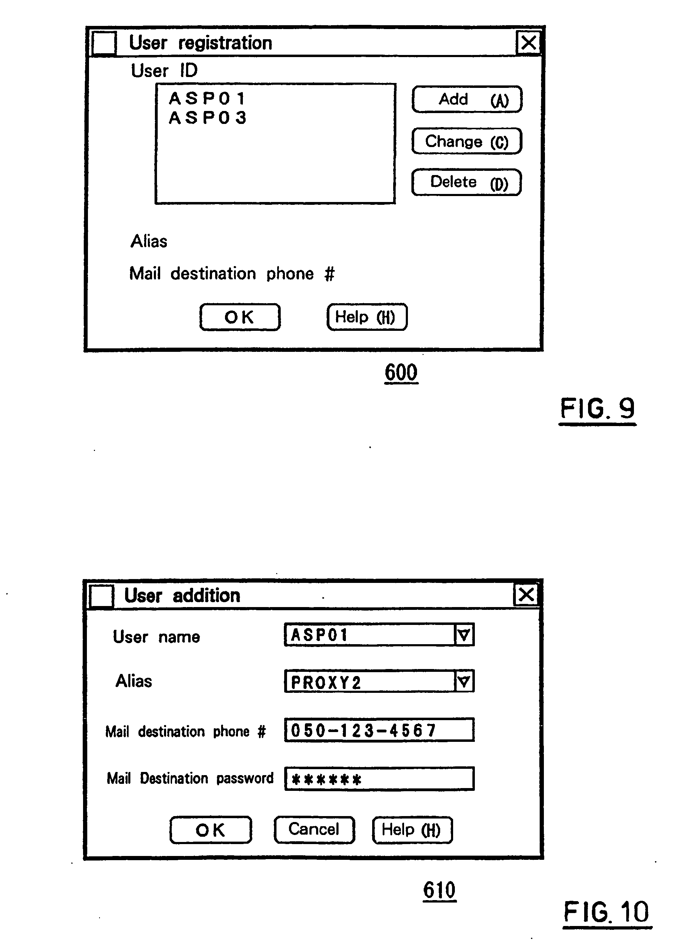

(c) For registration of a user in the mail proxy, a user registration is correlated, as is shown in Table 6, with the setup of the system configuration for the agent server 230. In this embodiment, for user registration a user interface in Figs. 9 and 10 is provided, and with this, a user can easily register himself or herself.

**[Table 6]**

| | | Mail receiver | Mail receiver |
|---|---|---|---|
| User ID | Alias | phone number | password |
| DSP01 | PROXY2 | 050-123-4567 | DSPPASS1 |
| DSP03 | PROXY1 | 050-234-5678 | DSPPASS3 |

(d) The phone number of the mail proxy 300 is 0462-12-3456.
(e) Two terminals are provided, and an e-mail including an agent mail keyword describing the contents of a mobile agent is sent from one terminal; the resultant e-mail is received at the other. The phone number of the sending terminal is 050-123-4567 and its password is DSPPASS1, while the phone number of the receiving terminal is 050-234-5678 and its password is DSPPASS3.
(l) First, an e-mail including an agent mail keyword is sent from terminal 1. To obtain the result at terminal 2, the phone number of which is 050-234-5678, an e-mail shown in Table 7 below is prepared.

**[Table 7]**

| | |
|---|---|
| From: | 050-123-4567 |
| To: | 0462-12-3456 |
| Date: | 1997/04/xx |
| Sub: | Test |
| #TEPLATE="SENDMAIL" | |
| #DEST=SRV | |
| #ARGS=JL03320 | |
| #RESULT=AUTO | |
| #RECEIVER=PROXY1 | |

"From: 050-123-4567" is the phone number of the sender, "To: 0462-12-3456" is the phone number of the mail proxy 300, "#TEMPLATE="SENDMAIL"" is the template name, "#DEST=SRV" is the agent server name, "#ARGS=JL03320" is an argument for a user program, "#RESULT=AUTO" is a method for processing the results, and "#RECEIVER=PROXY1" is an alias for the receiver of the results registered in the mail proxy 300.

### D. Generation and sending of object

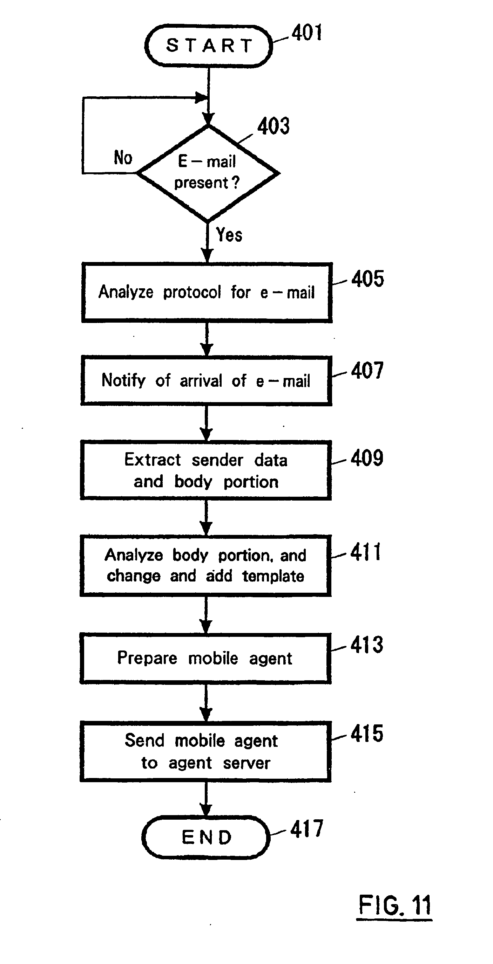

The sequential processing performed in the embodiment from the time an e-mail is received until a mobile agent is generated and sent will now be described while referring to the functional block diagram for the mail proxy 300 in Fig. 3 and a flowchart in Fig. 11.

The protocol engines 311 and 321 of the mail proxy 300 monitor the arrival of e-mail (block 403). The necessary protocols for the e-mail, which are sent from the terminals 211 and 213, are analyzed and processed by the protocol engines 311 and 321, and in this manner, files having the e-mail form are generated.

The protocol engines 311 and 321 notify the main handlers 313 and 323 of the arrivals of the e-mail (block 407). Upon receipt of this notification, the main handlers 313 and 323 extract information for senders and the body portions of the mail (block 409). When a return receiver is fixed, or a return receiver that is already registered is employed, the information for the sender does not need to be extracted.

The main handlers 313 and 323 send the extracted body portions of the mail and the extracted sender information via the mail API 330 to the mail interpreter 341. In the preferred embodiment of the present invention, the protocol engines 311 and 321 perform authentication before receiving mail from terminal 1. At this time, the password (DSPPASS1) that corresponds to the phone number (050-123-4567) of the terminal 1 is employed to determine whether it is registered in the subscriber table 349 of the configuration 345.

Following this, the mail interpreter 341 of the mail proxy 300 receives the mail and analyzes the contents of the mail keyword written in the body portion (block 411). At this time, based on the mail keyword, alteration, addition or deletion of the contents of a template designated with #TEMPLATE is performed.

Assuming the contents of registered template SENDMAIL are shown in Table 8 below,

**[Table 8]**

| |
|---|
| [NAG] |
| ; |
| Name=Agent1 |
| Feature=HostACC |
| Program=g:\mail\sendmail.exe |
| ProgramType=W32EXE |
| ProgramLocation=REMOTE |
| ProgramArgs=JL07457 |
| ResultHandling=NONE |
| Capability=<host1t1> |
| ReplyReceiverID=OS2CLN |

In accordance with the agent mail keyword for the e-mail in Table 7, the contents of the file for the template, which is designated by #TEMPLATE as the analysis results of the mail proxy 300, are changed as follows.

**[Table 9]**

| |
|---|
| [NAG] |
| ; |
| Name=Agent 1 |
| Destination=SRV |
| DestinationType=NAME |
| Feature=HostACC |
| Program=g:\mail\sendmail.exe |
| ProgramType=W32EXE |
| ProgramLocation=REMOTE |
| ProgramArgs=JL03320 |
| ResultHandling=AUTORETURN |
| Capability=<host1t1> |
| ReplyReceiverID=PROXY1 |

As is clearly apparent, "Destination=SRV" and "DestinationType=NAME" are added to Table 8, and "ProgramArgs=JL03320," "ResultHandling=AUTORETURN" and "ReplyReceiverID=PROXY1" are changed.

The agent sender 343 receives the new template, and based on this template, prepares the mobile agent 240 by using the client API 360 (block 413). Although the method for generating a mobile agent using a template is well known to one having ordinary skill in the art, in this embodiment, a mobile agent is generated by updating the class or the property of an object oriented program that serves as a pattern.

In this embodiment, the object oriented program that serves as a pattern is employed as an object for generating various agents. The idea of the present invention is not limited to this, and an object oriented program can be an ordinary one or a program that is not object oriented. In this case, an execution module can be newly generated by updating the class or the property of the object oriented program or by updating the source code, or a program that is changed based on the mail keyword can be executed by directly updating the execution module.

As for a program that is not an agent generation program, when, for example, there are a customer file, a sales file and a customer list generation program pattern, the current location of a person doing outside work and the type of products are input as mail keywords at the terminal and are sent to the server 200, so that it is possible to compile for that location a list of customers who bought products that correspond to the input product type.

In this embodiment, based on the sender information obtained from the mail API 330, the agent sender 343 acquires a user ID, which is registered in the agent server 230, and a password for it from the user registration in the subscriber table 349, and adds the user ID and the password to the prepared mobile agent.

To send the mobile agent to the agent server 230, from the telephone number (050-123-4567) of terminal 1, the mail proxy 300 employs DSP01 as the user ID for the agent server 230, and DSPPASS1 as a password.

The agent server 230 employs the user ID (DSP01) and the password (DSPPASS1), which are registered when the system is built, to determine whether or not a user has been registered in the agent server 230.

The generated mobile agent 240 is sent by the agent sender 343 via the client API 360. The request from the client API 360 is processed by the client agent manager 370, and as a matter of fact, a mobile agent is sent to a designated agent server (block 415). In this embodiment, since "SRV" is designated, the mobile agent is sent to the agent server 230. Although in this embodiment the agent server 230 is present in the same machine as is the mail proxy 300, an agent server present in another machine connected to the network can be designated.

### E. Handling the results obtained by processing an object

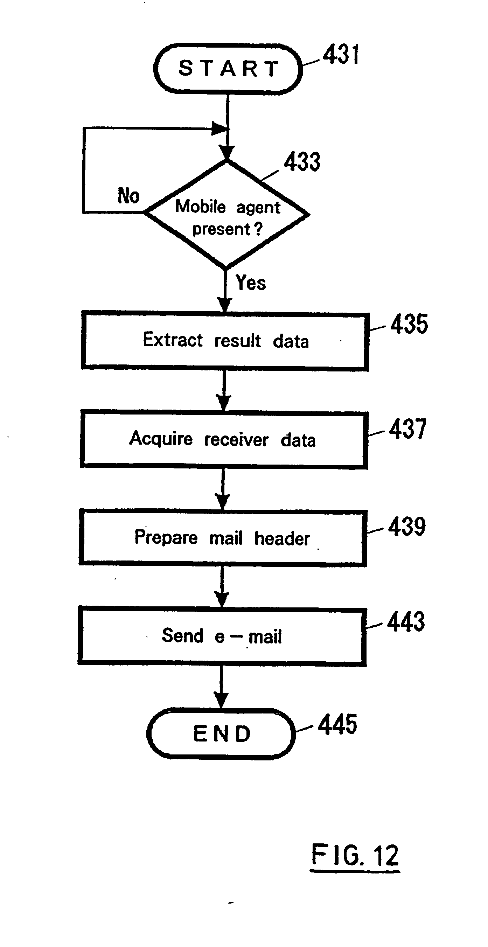

The sequential processing performed from the time the results obtained by processing the mobile agent are received until an e-mail is sent will now be explained while referring to the functional block diagram of the mail proxy 300 in Fig. 3 and a flowchart in Fig. 12.

The agent server 230 processes a received mobile agent 240. In accordance with the contents of a program executed by the mobile agent, a file in a host system 260, in a database 270 for the Lotus Notes, or on the hard disk of the server 200 is accessed to obtain a data file that includes processing results.

When there data including processing results are available, the agent server 230 prepares a mobile agent 245 in which the results are included, and sends it to the mail proxy 300.

The client agent manager 370 of the mail proxy 300 waits until the mobile agent 245 that includes the results is received.

When the mobile agent 245 that includes the results of the job is sent by the agent server 230 to the client agent manager 370, the mobile agent 245 is temporarily stored in the queue of the client agent manager 370.

The agent monitor 353 periodically examines the queue of the client agent manager 370 by employing the client API 360 to determine whether or not a mobile agent is present (block 433).

When the mobile agent 245 including the results of the job is present, the mail sender 355 extracts, from the mobile agent 245, data that serves as the body portion of the mail and that indicates the results (block 435). At this time, an alias, which is the return address for terminal 2 is acquired from the mobile agent 245, and based on the alias, the phone number of terminal 2 is obtained from user registration in the subscriber table 349 (block 437).

The body portion and the phone number data are sent via the mail API 330 to the mail handlers 310 and 320. The data that serves as the body portion of an e-mail can be changed that it can be easily handled by the terminal. For example, it is possible to translate data, to change the layout of data, to extract only the essential portion of a document, such as a headline, or to delete data if the quantity of the data exceeds a specific value, or to divide the data and send the head data to a designated destination and the remaining data to a substitute destination. In addition, the data can be changed not to an e-mail but to a voice signal or a FAX signal, which is sent to a designated destination.

The main handlers 313 and 323 acquire, from the mail sender 355, the return phone number of terminal 2 and the body portion of an e-mail. Then, the main handlers 313 and 323 prepare the header for an e-mail and add it to the body portion to provide an e-mail (block 439). In this case, mail destination phone number "050-234-5678" is employed according to a mail keyword designated as "#RECEIVER=PROXY1," and "DSPPASS3" is used for authentication. The protocol engines 311 and 321 change the protocol as necessary and send the e-mail to the terminal 2 (block 443).

### F. Others

An explanation has been given for the present invention using an e-mail system. Since the present invention can be accomplished when the mail proxy 300 acquires a mail keyword, if, instead of the mail processing function, a well known voice identification function or a voice synthesis function is provided for the mail proxy 300, the present invention can be implemented not with an e-mail but with a telephone. In this case, only the mail handlers 310 and 320 need be altered.

That is, only a function for analyzing a voice signal that is input across a telephone line and for extracting a body portion including a mail keyword, and a function for synthesizing sound with the processing results and sending the synthesized data when the results are returned to a terminal need be provided for the mail handlers 310 and 320.

Similarly, the present invention can be accomplished not with an e-mail but with a facsimile by providing, instead of the mail processing function, a well known character recognition function and a FAX sending function for the mail proxy 300. In this case also, only the mail handlers 310 and 320 need be changed.

In other words, only a function for analyzing a FAX signal input across a telephone line and for extracting a body portion including a mail keyword, and a function for converting process results into a FAX signal when the results are returned to a terminal need be provided for the mail handlers 310 and 320.

As is described above, according to the present invention, provided is a computer system that can, by using only a currently installed e-mail system, control a program to be executed by a server, even when special remote controlling software is not available at a remote controlling terminal.

According to another aspect of the present invention, provided is a computer system that, while not requiring special software, can obtain processing results from a remote controlled server by using only a current e-mail system.

According to an additional aspect of the present invention, provided is a computer system that can remotely control a server even when the memory capacity of a remote controlling terminal is small.

According to a further aspect of the present invention, provided is a computer system that can remotely control a server even when on an operating system there is a restriction such that a remote controlling terminal can not handle a file.

According to still another aspect of the present invention, provided is a remote controlling system whose employment is not dependent on the platform of a remote controlling terminal.

According to a still further aspect of the present invention, it is possible to reduce the input required by a remote controlling terminal for the exercise of the remote controlling function.

According to yet another aspect of the present invention, provided is a fast remote controlling system that reduces the quantity of data exchanged between a remote controlling terminal and a remote controlled server during a remote controlling operation.

According to yet an additional aspect of the present invention, provided is a remote controlling system that can perform various desirable remote controlling processes.

According to yet one further aspect of the present invention, provided is a remote controlling system that can dynamically alter a remote controlling process currently desired by a user and execute it.

According to one more aspect of the present invention, provided is a computer system that can generate a mobile agent on a network by using only the current e-mail system and without requiring special software, and that can obtain information at another site connected to the network.

According to still one more aspect of the present invention, provided is a computer system that can generate a mobile agent on a network even when the memory capacity of a terminal that issues a processing request is small, and that can obtain information from another site connected to the network.

According to yet one more aspect of the present invention, provided is a computer system that can generate a mobile agent on a network even when on an operating system there is a restriction, such that a terminal for issuing a processing request can not handle a file, and that can receive information from another site connected to the network.

According to also another aspect of the present invention, provided is a computer system that can generate a mobile agent on a network without depending on the platform of a terminal that issues a processing request, and that can obtain information from another site connected to the network.

According to also an additional aspect of the present invention, it is possible to simplify an input operation performed by a terminal that issues a processing request, when a mobile agent is generated on a network and information is obtained from another site connected to the network.

According to also a further aspect of the present invention, provided is a fast remote controlling system for reducing the quantity of data exchanged, between a terminal that issues a processing request and a server that generates a mobile gent, during an operation involving the generation of a mobile agent on a network, and for obtaining information from another site connected to the network.

According to also yet another aspect of the present invention, provided is a computer system that can execute a variety of processes a user desires during an operation for generating a mobile agent on a network, and that can obtain information from another site connected to the network.

According to also yet one more aspect of the present invention, provided is a computer system that can dynamically change the processing a user currently desires and can permit a mobile agent to execute it, when a mobile agent is generated on a network and information is obtained from another site connected to the network.

## Claims

1. A method, performed in a server connected to a network for generating a mobile agent from a received e-mail, comprising the steps of:
(a) detecting receiving of said e-mail in said server;
(b) analyzing said e-mail and extracting agent generation information; and
(c) generating a mobile agent according to said extracted agent generation information;
**characterised in that**
the contents of a stored template on the server are changed by template change information included in the received e-mail, said method further comprising the steps of:
(d) analyzing said template change information in said e-mail;
(e) changing said contents of a template stored in said server according to said analyzed template change information; and
(f) generating a mobile agent according to said changed template.

2. The method according to claim 1, wherein said template change information are either
receiver information concerning results obtained by executing said mobile agent;
sub-routine specific information constituting one part of said mobile agent;
argument information employed by said mobile agent;
additional information relative to said results of said mobile agent; or
resource specific information for a resource executing said mobile agent.

3. A method according to claim 1 further comprising:
executing said mobile agent and obtaining processing results;
converting said processing results into a formatted e-mail; and
sending said resultant e-mail.

4. A server, connectable to a network, for generating a mobile agent from a received e-mail, comprising:
(a) a mail handler for detecting receiving of said e-mail in said server;
(b) a mail interpreter for analyzing said e-mail and extracting agent generation information; and
(c) an agent sender for generating a mobile agent according to said extracted agent generation information;
**characterised in that**
the contents of a stored template on the server are changed by template change information included in the received e-mail, said method further comprising the steps of:
(d) analyzing said template change information in said e-mail;
(e) changing said contents of a template stored in said server according to said analyzed template change information; and
(f) generating a mobile agent according to said changed template.

5. A server as claimed in claim 4, further changing the contents of a template by using template change information included in said e-mail,
wherein said mail interpreter analyzes said template change information in said e-mail, and
changes said contents of a template stored in said server according to said analyzed template change information; and
said agent sender generates a mobile agent according to said changed template.

6. The server according to claim 4, wherein said template change information is either
(a) receiver information concerning results obtained by executing said mobile agent;
(b) sub-routine specific information constituting one part of said mobile agent;
(c) argument information employed by said mobile agent;
(d) additional information relative to said results of said mobile agent; or
(e) resource specific information for a resource executing said mobile agent.

7. A server according to claim 4, storing a plurality of agent generation templates,
wherein the e-mail has a mail keyword that includes template specific information and template change information sent from a terminal;
said mail interpreter is for analyzing said template specific information and said template change information included in said e-mail, and for selecting, from among said templates stored in said server, a template that corresponds to said analyzed template specify information, and for changing contents of said selected template according to said analyzed template change information;
and said server further comprising:
a client agent manager for sending said mobile agent and obtaining processing results; and
a mail sender for converting said processing results into a format for an e-mail.

8. A computer readable memory containing a computer program executable by a server, the server connectable to a network and storing agent generation templates, for receiving an e-mail and for generating a mobile agent that is designated by agent generation template specific information and agent generation template change information in said e-mail, said program comprising:
(a) program code for instructing said server to detect receiving of said e-mail in said server;
(b) program code for instructing said server to analyze said template specific information and said template change information in said e-mail;
(c) program code for instructing said server to select, from among said agent generation templates stored in said server, an agent generation template corresponding to said analyzed template specify information;
(d) program code for instructing said server to change contents of said selected agent generation template according to said analyzed template change information;
(e) program code for instructing said server to generate a mobile agent according to said changed agent generation template;
(f) program code for instructing said server to execute said mobile agent and to obtain processing results;
(g) program code for instructing said server to convert said processing results into a format for an e-mail; and
(h) program code for instructing said server to send said resultant e-mail.

## Patentansprüche

1. Verfahren, das in einem mit einem Netzwerk verbundenen Server ausgeführt wird, zum Erzeugen eines mobilen Agenten aus einer empfangenen email, wobei das Verfahren die folgenden Schritte umfasst:
(a) Erkennen des Empfangs der eMail im Server;
(b) Analysieren der eMail und Entnehmen der Daten zum Erzeugen des Agenten; und
(c) Erzeugen eines mobilen Agenten entsprechend den entnommenen Daten zum Erzeugen des Agenten;
**dadurch gekennzeichnet, dass**
die Inhalte einer gespeicherten Vorlage auf dem Server durch in der empfangenen eMail enthaltene Daten zum Ändern der Vorlage geändert werden, wobei das Verfahren ferner die folgenden Schritte umfasst:
(d) Analysieren der Daten in der eMail zum Ändern der Vorlage;
(e) Ändern der Inhalte einer im Server gespeicherten Vorlage entsprechend den analysierten Daten zum Ändern der Vorlage; und
(f) Erzeugen eines mobilen Agenten entsprechend der geänderten Vorlage.

2. Verfahren nach Anspruch 1, bei dem als Daten zum Ändern des Vorlage entweder
Empfängerdaten bezüglich der durch das Ausführen des mobilen Agenten erhaltenen Ergebnisse
kennzeichnende Daten einer Unterroutine, die einen Teil des mobilen Agenten bildet;
Argumentdaten, die vom mobilen Agenten genutzt werden;
zusätzliche Daten bezüglich der Ergebnisse des mobilen Agenten; oder
ressourcenspezifische Daten für eine Ressource infrage kommen, die den mobilen Agenten ausführt.

3. Verfahren nach Anspruch 1, das ferner folgende Schritte umfasst:
Ausführen des mobilen Agenten und Gewinnen von Verarbeitungsergebnissen;
Umsetzen der Verarbeitungsergebnisse in eine formatierte eMail; und
Senden der erzeugten eMail.

4. Server, der mit einem Netzwerk verbunden werden kann, zum Erzeugen eines mobilen Agenten aus einer empfangenen email, wobei der Server Folgendes umfasst:
(a) ein eMail-Bedienprogramm zum Erkennen des Empfangs der eMail im Server;
(b) ein eMail-Auswerteprogramm zum Analysieren der eMail und zum Entnehmen der Daten zum Erzeugen eines Agenten; und
(c) einen Agentensender zum Erzeugen eines mobilen Agenten entsprechend den entnommenen Daten zum Erzeugen eines Agenten;
**dadurch gekennzeichnet, dass**
die Inhalte einer im Server gespeicherten Vorlage durch die in der empfangenen eMail enthaltenen Daten zum Ändern der Vorlage geändert werden, wobei das Verfahren ferner die folgenden Schritte umfasst:
(d) Analysieren der Daten in der eMail zum Ändern der Vorlage;
(e) Ändern der Inhalte einer im Server gespeicherten Vorlage entsprechend den analysierten Daten zum Ändern der Vorlage; und
(f) Erzeugen eines mobilen Agenten entsprechend der geänderten Vorlage.

5. Server nach Anspruch 4, der ferner die Inhalte einer Vorlage unter Verwendung der in der eMail enthaltenen Daten zum Ändern der Vorlage ändert,
wobei das eMail-Auswerteprogramm die Daten in der eMail zum Ändern der Vorlage analysiert, und
die Inhalte einer im Server gespeicherten Vorlage entsprechend den analysierten Daten zum Ändern der Vorlage ändert; und
der Agentensender einen mobilen Agenten entsprechend der geänderten Vorlage erzeugt.

6. Server nach Anspruch 4, bei dem als Daten für das Ändern der Vorlage entweder
(a) Empfängerdaten bezüglich der durch das Ausführen des mobilen Agenten erhaltenen Ergebnisse
(b) kennzeichnende Daten einer Unterroutine, die einen Teil des mobilen Agenten bildet;
(c) Argumentdaten, die vom mobilen Agenten genutzt werden;
(d) zusätzliche Daten bezüglich der Ergebnisse des mobilen Agenten; oder
(e) ressourcenspezifische Daten für eine Ressource infrage kommen, die den mobilen Agenten ausführt.

7. Server nach Anspruch 4, in dem eine Vielzahl von Vorlagen zum Erzeugen eines Agenten gespeichert sind,
wobei die eMail ein Schlüsselwort aufweist, das von einem Datenendgerät gesendete vorlagenspezifische Daten und Daten zum Ändern der Vorlage enthält;
wobei das eMail-Auswerteprogramm zum Analysieren der in der eMail enthaltenen vorlagenspezifischen Daten und der Daten zum Ändern der Vorlage, zum Auswählen einer Vorlage aus den im Server gespeicherten Vorlagen, die den analysierten vorlagenspezifischen Daten entspricht, und zum Ändern der Inhalte der ausgewählten Vorlage entsprechend den analysierten Daten zum Ändern der Vorlage dient;
und wobei der Server ferner Folgendes umfasst:
ein Client-Agentenverwaltungsprogramm zum Senden des mobilen Agenten und zum Gewinnen von Verarbeitungsergebnissen; und
einen eMail-Sender zum Umsetzen der Verarbeitungsergebnisse in ein Format für eine email.

8. Speicher, der von einem Computer gelesen werden kann und in einem Server, der mit einem Netzwerk verbunden werden kann und in dem Vorlagen zum Erzeugen eines Agenten gespeichert sind, ein von einem Computer ausführbares Programm enthält, das zum Empfangen einer eMail und zum Erzeugen eines mobilen Agenten vorgesehen ist, der durch vorlagenspezifische Daten zum Erzeugen eines Agenten und durch Daten zum Ändern einer Vorlage zum Erzeugen eines Agenten **gekennzeichnet** ist, wobei das Programm folgende Schritte umfasst;
(a) einen Programmcode zum Anweisen des Servers, den Empfang der eMail im Server zu erkennen;
(b) einen Programmcode zum Anweisen des Servers, die in der eMail enthaltenen vorlagenspezifischen Daten und die Daten zum Ändern der Vorlage zu analysieren;
(c) einen Programmcode zum Anweisen des Servers, aus den im Server gespeicherten Vorlagen zum Erzeugen eines Agenten eine Vorlage zum Erzeugen eines Agenten auszuwählen, die den analysierten vorlagenspezifischen Daten entspricht;
(d) einen Programmcode zum Anweisen des Servers, die Inhalte der ausgewählten Vorlage zum Erzeugen eines Agenten entsprechend den analysierten Daten zum Ändern der Vorlage zu ändern;
(e) einen Programmcode zum Anweisen des Servers, einen mobilen Agenten entsprechend der geänderten Vorlage zum Erzeugen eines Agenten zu erzeugen;
(f) einen Programmcode zum Anweisen des Servers, den mobilen Agenten auszuführen und Verarbeitungsergebnisse zu gewinnen;
(g) einen Programmcode zum Anweisen des Servers, die Verarbeitungsergebnisse in ein Format für eine eMail umzusetzen; und
(h) einen Programmcode zum Anweisen des Servers, die erzeugte eMail zu senden.

## Revendications

1. Un procédé, mis en oeuvre dans un serveur connecté à un réseau, pour générer un agent mobile à partir d'un courriel reçu, comprenant les étapes consistant à :
(a) détecter la réception dudit courriel dans ledit serveur ;
(b) analyser ledit courriel et extraire l'information de génération d'agent ; et
(c) générer un agent mobile, selon ladite information de génération d'agent extraite ;
**caractérisé en ce que**
les contenus d'un modèle stocké sur le serveur sont modifiés par une information de changement de modèle, incluse dans ledit courriel reçu, ledit procédé comprenant en outre les étapes consistant à ;
(d) analyser ladite information de changement de modèle dans ledit courriel ;
(e) modifier lesdits contenus d'un modèle stocké dans ledit serveur, selon ladite information de changement de modèle analysée ; et
(f) générer un agent mobile, selon ledit modèle modifié.

2. Le procédé selon la revendication 1, dans lequel ladite information de changement de modèle est soit :
une information de récepteur, concernant des résultats obtenus par exécution dudit agent mobile ;
une information spécifique à un sous-programme, constituant une partie dudit agent mobile ;
une information d'argument, employée par ledit agent mobile ;
une information additionnelle, relative auxdits résultats dudit agent mobile ;
une information spécifique à une ressource, pour une ressource exécutant ledit agent mobile.

3. Le procédé selon la revendication 1, comprenant en outre :
l'exécution dudit agent mobile et l'obtention de résultats de traitement ;
la conversion desdits résultats de traitement en un courriel formaté , et l'envoi dudit courriel résultant.

4. Un serveur, susceptible d'être connecté à un réseau, pour générer un agent mobile à partir d'un courriel reçu, comprenant :
(a) un gestionnaire de messagerie, pour détecter la réception dudit courriel dans ledit serveur ;
(b) un interpréteur de messagerie, pour analyser ledit courriel et extraire une information de génération d'agent ; et
(c) un expéditeur d'agent, pour générer un agent mobile selon ladite information de génération d'agent extraite ;
**caractérisé en ce que**
les contenus d'un modèle stocké sur le serveur sont modifiés par une par une information de changement de modèle, incluse dans ledit courriel reçu, ledit procédé comprenant en outre les étapes consistant à ;
(d) analyser ladite information de changement de modèle dans ledit courriel ;
(e) modifier lesdits contenus d'un modèle stocké dans ledit serveur, selon ladite information de changement de modèle analysée ; et
(f) générer un agent mobile, selon ledit modèle modifié.

5. Un serveur, tel que revendiqué à la revendication 4, en outre modifiant les contenus d'un modèle, par utilisation d'une information de changement de modèle, incluse dans ledit courriel, dans lequel ledit interpréteur de messagerie analyse ladite information de changement de modèle présente dans ledit courriel, et
modifie lesdits contenus d'un modèle stocké dans ledit serveur, selon ladite information de changement de modèle analysée ; et
ledit expéditeur d'agent génère un agent mobile, selon ledit modèle modifié.

6. La serveur selon la revendication 4, dans lequel ladite information de changement de modèle est, soit :
(a) une information de récepteur, concernant des résultats obtenus par exécution dudit agent mobile ;
(b) une information spécifique à un sous-programme, constituant une partie dudit agent mobile ;
(c) une information d'argument, employée par ledit agent mobile ;
(d) une information additionnelle, relative auxdits résultats dudit agent mobile ; ou
(e) une information spécifique à une ressource, pour une ressource exécutant ledit agent mobile.

7. Un serveur selon la revendication 4, stockant une pluralité de modèles de génération d'agent,
dans lequel le courriel présente un mot-clé de messagerie, comprenant une information spécifique à un modèle et une information de changement de modèle, envoyées depuis un terminal ;
ledit interpréteur de messagerie est prévu pour analyser ladite information spécifique à un modèle, et ladite information de changement de modèle, incluses dans ledit courriel, et pour sélectionner, parmi lesdits modèles stockés dans ledit serveur, un modèle qui correspond à ladite information de changement spécifique à un modèle analysée, et pour changer les contenus dudit modèle sélectionné, selon ladite information de changement de modèle analysée;
et ledit serveur comprenant en outre :
un gestionnaire d'agent client, pour envoyer ledit agent mobile et obtenir des résultats de traitement ; et
un expéditeur de messagerie, pour convertir lesdits résultats de traitement en un format pour un courriel.

8. Une mémoire, lisible par ordinateur, contenant un programme informatique, exécutable par un serveur, le serveur étant susceptible d'être connecté à un réseau et stockant des modèles de génération d'agent, pour recevoir un courriel et pour générer un agent mobile, conçu par une information spécifique à un modèle de génération d'agents, et une information de changement de modèle de génération d'agents dans ledit courriel, ledit programme comprenant :
(a) un code de programme, pour dicter audit serveur de détecter la réception dudit courriel dans ledit serveur ;
(b) un code de programme, pour dicter audit serveur d'analyser ladite information spécifique à un modèle et ladite information de changement de modèle, dans ledit courriel ;
(c) un code de programme, pour dicter audit serveur de sélectionner, parmi lesdits modèles de génération d'agent stockés dans ledit serveur, un modèle de génération d'agents correspondant à ladite information spécifique à un modèle analysée ;
(d) un code de programme, pour dicter audit serveur de modifier les contenus dudit modèle de génération d'agents sélectionné, selon ladite information de changement de modèle analysée ;
(e) un code de programme, pour dicter audit serveur de générer un agent mobile selon ledit modèle de génération d'agents modifié ;
(f) un code de programme, pour dicter audit serveur d'exécuter ledit agent mobile et pour obtenir des résultats de traitement ;
(g) un code de programme, pour dicter audit serveur de convertir lesdits résultats de traitement en un format pour un courriel ; et
(h) un code de programme, pour dicter audit serveur d'expédier ledit courriel résultant.
